# EUROPEAN PATENT APPLICATION

(11) **EP 4 485 030 A1**
(43) Date of publication of application: **01.01.2025**
(21) Application number: 24182358.2
(22) Date of filing: 14.06.2024
(51) Int. Cl.: G02B 6/44

(54) **A RETAINING ELEMENT**

(30) Priority: 27.06.2023 IT 202300013290
(71) Applicant: Prysmian S.p.A., 20126 Milano (IT)
(72) Inventor: Abbiati, Fabio, 20126 Milano (IT); Le Dissez, Arnaud, 20126 Milano (IT)
(74) Representative: Perani & Partners S.p.A.

(57) **Abstract**

A retaining element (1) for retaining and securing an optical cable (2), the retaining element (1) comprising: a first retaining wall (10) and a second retaining wall (20); a connection base (30) connecting the first retaining wall (10) to the second retaining wall (20), the connection base (30) having a support surface (30a)for receiving an optical cable (2) along a longitudinal direction (X-X); a first support wall (50) and a second support wall (60) attachable to an optical box (100) and extending from the connection base (30), the first support wall (50) and the second support wall (60) respectively with the first retaining wall (10) and the second retaining wall (20) defining therebetween a first tightening aperture (71) and a second tightening aperture (72) configured to receive a cable tie (3); at least a portion of the first retaining wall (10) is configured to flex with respect to the connection base (30) to approach the first retaining wall (10) to second retaining wall (20) upon tightening of the cable tie (3) passing through the first and second tightening apertures (71, 72).

## Description

### Field of the invention

The present invention relates to the field of equipment and components for the installation of optical cables in an optical cable box. In particular, the present invention relates to an assembly for retaining and securing an optical cable.

### Background of the invention

A FTTH ("Fiber To The Home") network is an optical access network providing a number of end customers with broadband communication services from operators, i.e. with services requiring data transmission at a rate of some hundreds of Mbit/s or more.

Typically, a FTTH network comprises a central unit which is connected with one (or more) optical cable box which is typically located in the basement of the building where the end customers reside.

From the optical cable box, the final customer can be directly reached by an optical cable, hereinafter referred to as "drop cable".

Alternatively, when the optical cable box is located in a building having multi dwelling units, for example arranged in a plurality of floors, intermediate optical modules are installed at each floor for receiving an optical cable, hereinafter referred to as "riser cable", which exits the optical cable box and runs vertically through the building from the basement up to all the building floors. Typically, riser cables may contain up to 96 optical fibers. The connection between the intermediate optical modules and the customer's residence is then performed with drop cables connected to the relevant fibers of the riser cable, typically at the customer's floor.

Distribution boxes, as well as optical modules or the like, comprise an opening suitable for housing the end of the optical cables and also retaining elements for retaining and securing the optical cables.

Such retaining elements are designed and configured to retain optical cables with specific diameter. This leads to have a retaining element for each optical cable having a specific diameter. Furthermore, in some cases, a cable tie is used to directly attach the optical cable to the retaining element. This could damage the optical cable if during tightening operation the cable tie is too tight.

EP3221732B1 discloses an assembly for retaining and securing an optical cable comprising a retaining element and a housing with an insertion seat. The retaining element has a first retaining wall, a second retaining wall and a connection part connecting the first and second retaining walls. The connection part is configured to resiliently deform upon insertion of the retaining element in the insertion seat to allow mutual approach of said first and second retaining walls.

EP 3066506 B1 discloses an assembly for retaining and securing an optical cable comprising a retaining element and a housing. The retaining element comprises a seat configured to receive the optical cable, an insertion port configured to allow side insertion of the optical cable in the seat and at least one elastic portion configured to act on the optical cable received in the seat for retaining the optical cable. The housing has a mounting surface for removably attaching the retaining element to the housing and the mounting surface is configured to close the insertion port when the retaining element is attached to the mounting surface.

EP 2989494 B1 discloses a device for securing and retaining an optical cable comprising optical fiber units, flexible strength members and an outer sheath. Furthermore, the device comprises: a reel configured to receive at least one turn of said strength members and a clip configured to cooperate with said reel for maintaining said at least one turn of the strength members around said reel.

### Summary of the invention

The applicant has tackled the problem of providing a retaining element able to retain and secure optical cables having different diameters and at the same time able to reduce possible damages during tightening of a cable tie.

The Applicant has found that providing a retaining element attachable to a cable box and provided with at least a first retaining wall able to flex with respect to a connection base and configured to approach a second retaining wall, allows to correctly retain between the first and second retaining walls an optical cable having different diameters.

Therefore, the present invention relates to retaining element for retaining and securing an optical cable, the retaining element comprising: a first retaining wall and a second retaining wall, a connection base connecting the first retaining wall to the second retaining wall, the connection base having a support surface for receiving an optical cable along a longitudinal direction. The retraining element comprises: a first support wall and a second support wall attachable to an optical box and extending from the connection base, the first support wall and the second support wall respectively with the first retaining wall and the second retaining wall defining therebetween a first tightening aperture and a second tightening aperture configured to receive a cable tie. At least a portion of the first retaining wall is configured to flex with respect to the connection base to approach the first retaining wall to second retaining wall upon tightening of the cable tie passing through the first and second tightening apertures.

According to one embodiment, the first retaining wall comprises a first hinge portion connected to the connection base and configured to flex for pivoting the at least a portion of the first retaining wall with respect to the connection base around one or more pivoting axes parallel to the longitudinal direction.

According to one embodiment, at least a portion of the second retaining is configured to flex with respect to the connection base to mutually approach the first retaining wall and the second retaining wall upon tightening of the cable tie passing through the first and second tightening apertures.

According to one embodiment, the second retaining wall comprises a second hinge portion connected to the connection base and configured to flex for pivoting the at least a portion of the second retaining wall around one or more pivoting axes parallel to the longitudinal direction.

According to one embodiment, the first hinge portion and the second hinge portion comprise one or more tapered portions defining a relative pivoting axis.

According to one embodiment, the first hinge portion and the second hinge portion comprise respectively: a first tapered portion connected to the at least a portion of the first retaining wall and the second retaining wall and a second tapered portion connected to the connection base and a connecting portion connecting the first tapered portion to the second tapered portion.

According to one embodiment, the first retaining wall and the second retaining wall respectively comprise a first retaining portion and a second retaining portion, the first retaining portion and the second retaining portion being joined to the first and second hinge portions and being configured to mutually pivot around the one or more pivoting axes.

According to one embodiment, the first hinge portion and the second hinge portion are configured to reversibly pivot the first and second retaining portions with respect to the connection base upon tightening of a cable tie.

According to one embodiment, the first and second retaining walls have respective inner surfaces configured to act on the optical cable and opposed outer surfaces, the first and second retaining walls comprising wall retaining elements arranged on inner surfaces and configured to prevent the optical cable from sliding relative to the first and second retaining walls along the longitudinal direction.

According to one embodiment, the connection base comprising base retaining elements arranged on the support surface and configured to prevent the optical cable from sliding relative to the connection base along the longitudinal direction.

According to one embodiment, the connection base comprises a cable tie retaining element configured to longitudinally retain a cable tie.

According to one embodiment, the first support wall and the second support wall comprise retaining attachment members configured to removably attach the retaining element to the optical box and support members configured to support the retaining element with respect to the optical box along a insertion direction perpendicular to the longitudinal direction.

The present invention further relates to a retaining assembly comprising an optical cable to be retained with respect to an optical box, at least one retaining element attachable to the optical box for retaining and securing the optical cable, a cable tie passing through the first and second tightening apertures to flex the at least a portion of the first retaining wall to approach the first retaining wall to the second retaining walls upon tightening of the cable tie.

The present invention further relates to a cable box comprising a base and wall extending from the base, the base having a retaining frame; at least one retaining element, wherein the first and second support walls are attached to the retaining frame and the at least one retaining element being configured to retain an optical cable with respect to the retaining frame upon tightening of the cable tie passing through the first and second tightening apertures.

According to one embodiment, the at least one retaining element is formed in one-piece with the retaining frame.

### Brief description of the drawings

The present invention will now be described in more detail hereinafter with reference to the accompanying drawings, in which some embodiments of the invention are shown.
FIG. 1 is a perspective view of the retaining element according to one embodiment of the present invention,
FIG. 2 is front view of the retaining element of the FIG. 1;
FIG. 3 is a front view of the retaining element according to one embodiment of the present invention;
FIG. 4 is a top view of the retaining element of the FIG. 1
FIG. 5 is a further perspective view of the retaining element of FIG. 1;
FIG. 6 is a further perspective view of the retaining element of FIG. 1;
FIG. 7 is a further perspective view of the retaining element of FIG. 1 with a cable tie;
FIG. 8 is a schematic front view of the retaining element of the FIG. 1 in a first configurati on;
FIG. 9 is a schematic front view of the retaining element of the FIG. 1 in a second configurati on;
FIG. 10 is perspective view of the retaining assembly according to one embodiment of the present invention;
FIG. 11 is a perspective view of the retaining element mounted on a cable box according to one embodiment of the present invention;
FIG. 12 is a front view of the retaining element according to one embodiment of the present invention.

### Detailed description

For the purpose of the present invention, an optical cable 2 is deemed to be an optical cable comprising one or more optical fibers, possibly arranged inside one or more buffer tubes, an outer sheath and, optionally, one or more strength members. Namely, the optical cable 2 has an outer surface 2a to be retained.

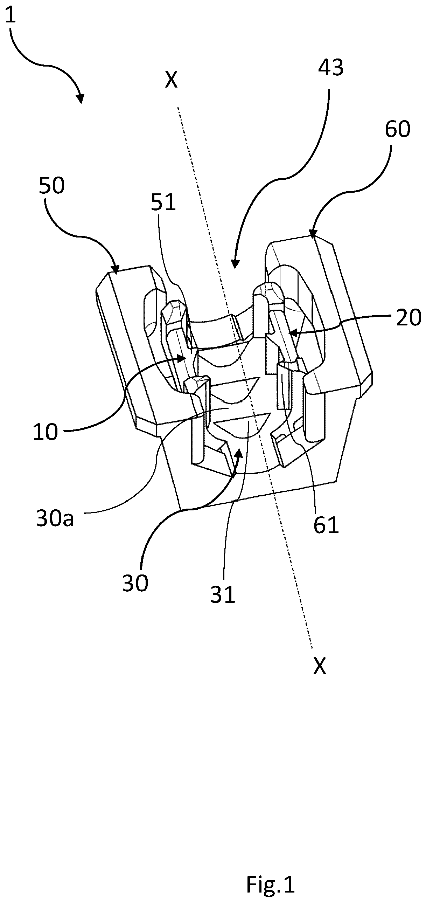

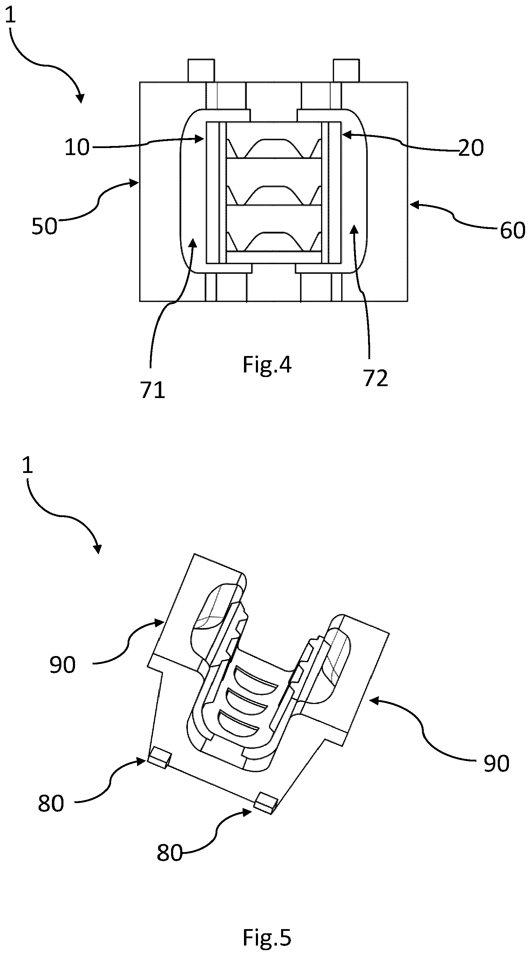

Figures 1-12 show a retaining element 1 for retaining and securing optical cables 2, for example a drop cable.

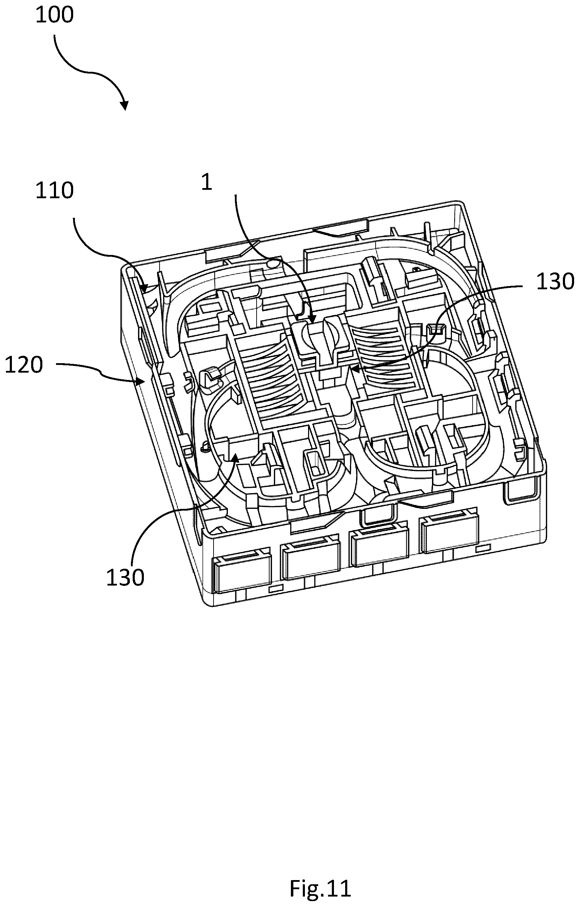

Such retaining element 1 can be associated to a cable box 100 as shown in figure 11. The retaining element 1 is configured to retain and secure an optical cable 2, in particular optical cables having different diameters.

The retaining element 1 comprises a first retaining wall 10, a second retaining wall 20 and a connection base 30 connecting the first retaining wall 10 to the second retaining wall 20.

According to one embodiment, the connection base 30 has a support surface 30a for receiving an optical cable 2. In particular, the support surface 30a is configured to contact the outer surface 2a of the optical cable 2. Namely, the connection base 30 comprises base retaining elements 31 arranged on the support surface 30a and configured to prevent the optical cable 2 from sliding relative to the connection base 30 along the longitudinal direction X-X.

The base retaining elements 31 protrude from the support surface 30a and are configured to engage the outer surface 2a of the optical cable 2.

According to one embodiment, the first and second retaining walls 10, 20 have respective inner surfaces 10a, 20a configured to act on a cable 2 and opposed outer surfaces 10b, 20b. Namely, the first and second retaining walls 10, 20 comprise wall retaining elements 51, 61 arranged on the inner surfaces 10a, 20a and configured to prevent the optical cable 2 from sliding relative to the first and second retaining walls 10, 20 along the longitudinal direction X-X.

The wall retaining elements 51, 61 protrude from the inner surfaces 10a, 20a and they are configured to engage the outer surface 2a of the optical cable 2.

The retaining elements 51, 61 and the base retaining elements 31 can comprise teeth protruding from the inner surface 10a, 20a and the support surface 30a and mutually spaced apart along the longitudinal direction X-X.

The retaining element 1 comprises a first support wall 50 and a second support wall 60 attachable to an optical box 100.

The first and second support walls 50, 60 extend from the the connection base 30. Namely, the first and second support walls 50, 60 are connected to the connection base 30 externally with respect to the support surface 30a.

The first and second support walls 50, 60 are respectively associated to the first and second support walls 10, 20 to retain and secure the optical cable 2. According to one embodiment, the first support wall 50 and the second support wall 60 respectively with the first retaining wall 10 and the second retaining wall 20 define therebetween a first tightening aperture 71 and a second tightening aperture 72 configured to receive a cable tie 3.

The first and second tightening apertures 71,72 allow the cable tie 3 to surround the first and second retaining wall 10, 20. Namely, the first and second tightening apertures 71, 72 allow the engagement of both the first and second retaining walls 10, 20 by the cable tie 3.

According to one embodiment, the first and second support walls 50, 60 are removably attached to the optical box 100.

The first support wall 50 and the second support wall 60 can comprise retaining attachment members 80 configured to removably attach the retaining element 1 to the optical box 100 and support members 90 configured to support the retaining element 1 with respect to the optical box 100 along the insertion direction Z-Z perpendicular to the longitudinal direction X-X.

The retaining attachment members 80 are configured to engage relative cable box attachment members formed on the cable box to removably attach the retaining element 1 to the cable box 100. The retaining attachment members 80 can comprise protrusions 81 removably engaging a seat of the cable box attachment members.

The support members 90 have flanges 91 outwardly projecting along the spacing direction Y-Y and configured to engage resting members formed on the cable box 100.

Alternatively, the first and second support walls 50, 60 can be made in one piece with the optical box 100.

At least a portion of the first retaining wall 10 is configured to flex with respect to the connection base 30 to approach the first retaining wall 10 to the second retaining wall 20 upon tightening of the cable tie 3 passing through the first and second tightening apertures 71, 72. According to one embodiment, the first retaining wall 10 pivots towards the second retaining wall 20 upon tightening of the cable tie 3.

Thanks to the first and second retaining walls 10, 20 which are configured to directly engage the optical cable 2, the compression force is distributed on the outer surface 2a of the optical cable 2.

Namely, the first retaining wall 10 can be pushed inwards to retain the optical cable arranged on the support surface 30a. The first and second retaining walls 10, 20 can pass from a receiving configuration configured to receiving the optical cable 2 on the support surface 30a to a retaining configuration to retain the optical cable 2 between the first and second retaining walls 10, 20 upon tightening of the cable tie 3.

According to one embodiment, the first retaining wall 10 comprises a first hinge portion 11 connected to the connection base 30 and configured to flex for pivoting the at least a portion of the first retaining wall 10 with respect to the connection base 30 around one or more pivoting axes A-A parallel to the longitudinal direction X-X.

The first hinge portion 11 allows pivoting of the first retaining wall 10 towards the second retaining wall 20 to retain the optical cable 2.

According to an alternative embodiment, also at least a portion of the second retaining wall 20 is configured to flex with respect to the connection base 30 to mutually approach the first retaining wall 10 and the second retaining wall 20 upon tightening of the cable tie 3 passing through the first and second tightening apertures 71, 72. In particular, both the first and second retaining wall 10, 20 are configured to mutually approach pivoting with respect to the relative portion able to flex.

According to one embodiment, the second retaining wall 20 comprises a second hinge portion 21 connected to the connection base 30 and configured to flex for pivoting the at least a portion of the second retaining wall 30 around one or more pivoting axes A-A parallel to the longitudinal direction X-X. Also in the present embodiment, the second hinge portion 21 allows pivoting of the first retaining wall 10 towards the first retaining wall 20 to retain the optical cable 2.

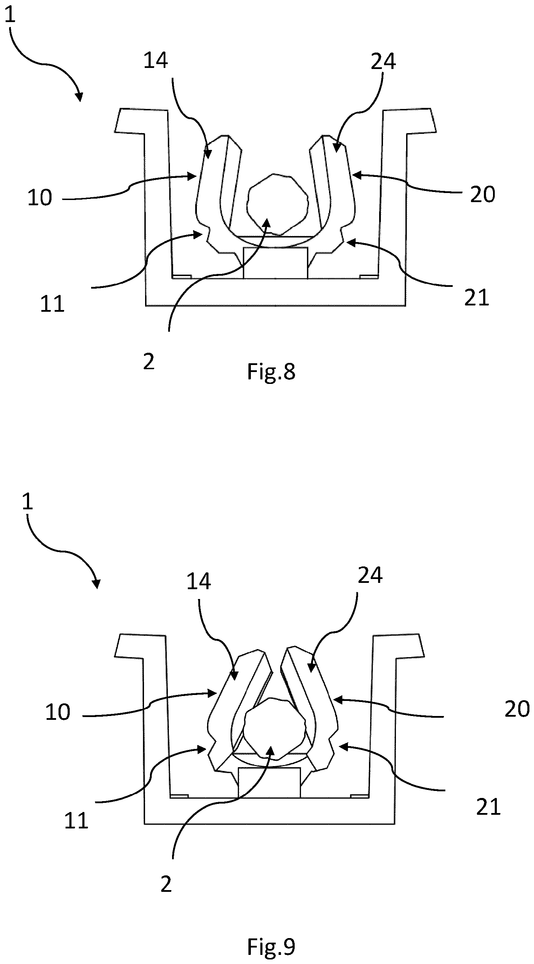

In particular, the first and the second retaining walls 10, 20 can be pushed inwards to retain the optical cable arranged on the support surface 30a as schematically shown in figure 9. The first and second retaining walls 10, 20 can pass from the receiving configuration, shown in figure 8, for receiving the optical cable 2 on the support surface 30a to the retaining configuration for retaining the optical cable 2 between the first and second retaining walls 10, 20 upon tightening of the cable tie 3 as shown in figure 9.

Thanks to the approaching of the first and second retaining walls 10, 20, the first and second retaining walls 10, 20 cooperate with the connection base 30 to retain the cable along the longitudinal direction X-X and along the insertion direction Z-Z. In particular, the retaining element 1 is configured to prevent movement of the retained optical cable along the longitudinal direction X-X and along the insertion direction Z-Z.

According to one embodiment, the connection base 30, the first and the second retaining walls 10, 20 can define a retaining seat 40 for receiving the optical cable 2 along a longitudinal direction X-X. The retaining seat 40 is configured to accommodate a portion of the optical cable 2 such that the connection base 30, the first retaining wall 10 and the second retaining wall 20 act on the outer surface 2a of the optical cable 2 to retain it.

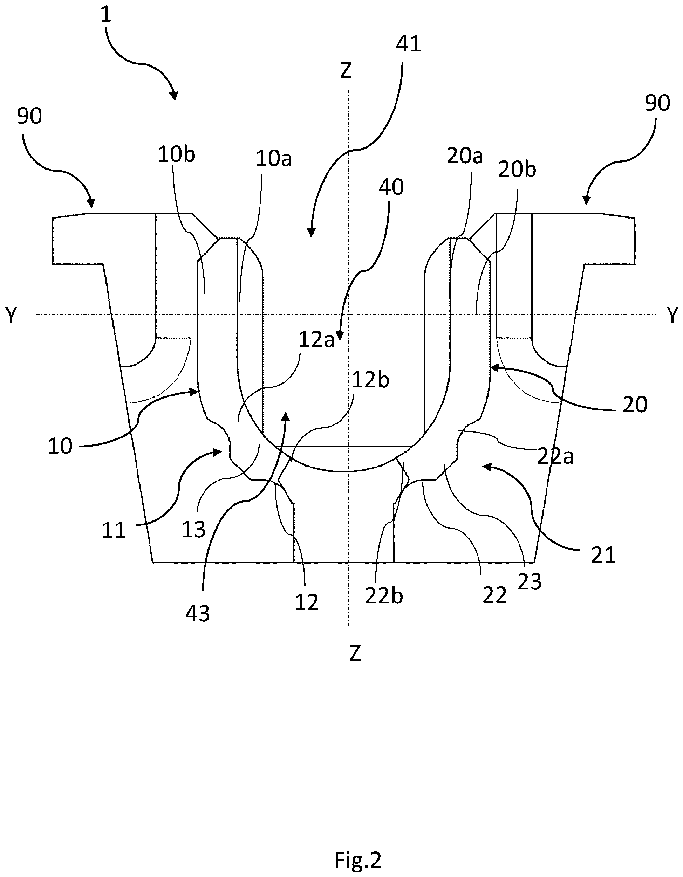

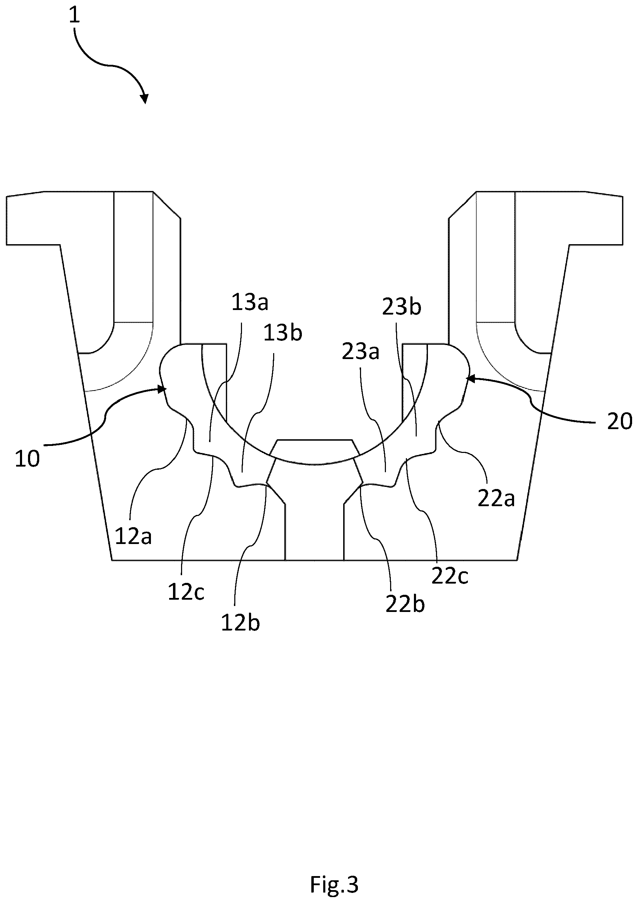

According to one embodiment as shown in figures 2 or 3, the first and the second retaining walls 10, 20 are spaced apart along a spacing direction Y-Y to allow the insertion of the optical cable 2 therebetween. Namely, the first and the second retaining walls 10, 20 defines the retaining seat 40 configured to receive the optical cable 2. It is worth noting that retaining seat 40 can have a semi-channel shape with "U" section. In details, the first and the second retaining walls 10, 20 define respective angles greater than zero with respect to the connection base 30.

Accordingly, the retaining element 1 has an insertion opening 41 for insertion of the optical cable 1 in the retaining seat 40 and two passage openings 42, 43 for passage of the optical cable 2 received in the retaining seat 40. The insertion opening 41 extends along the longitudinal direction X-X between the two passage openings 42, 43 such that the optical cable 2 received in the retaining seat 40 comes out from the retaining element 1 at opposite sides through the two passage openings 42, 43 and is surrounded by the connection base 30 and the first and second retaining walls 10, 20.

In particular, the optical cable 2 is inserted in the retaining seat 40 along an insertion direction Z-Z transverse to the longitudinal direction X-X.

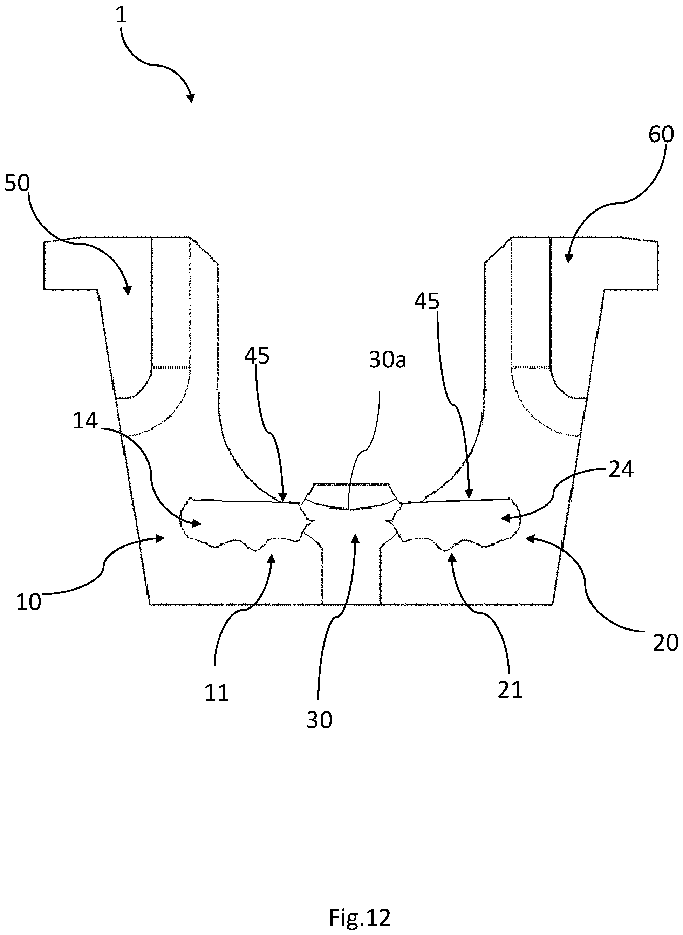

According to an alternative embodiment shown in figure 12, the first and the second retaining walls 10, 20 project outwardly along the spacing direction Y-Y from the connection base 30 defining a support plane 45. The first and the second retaining walls 10, 20 together with the connection base 30 define retaining seat 40 upon tightening of the cable tie 3. Namely, the first and the second retaining walls 10, 20 mutually approach to wrap around the optical cable 2 arranged on the support surface 30a defining the retaining seat 40 having a shape substantially equal to the shape of the previous embodiment. In details, the first and the second retaining walls 10, 20 define respective angles substantially equal to zero with respect to the connection base 30.

In particular, the optical cable 2 is arranged on the support surface 30a along the insertion direction Z-Z.

Hereinafter, reference will be made to the embodiment where the first and second retaining walls 10, 20 are at least in part flexible. However, the technical features referred to the first and second hinge portions 11, 21 can be considered applicable to the embodiment having one of the at least a portion of the first retaining wall 10 and the at least a portion of the second retaining wall 20 able to flex.

According to one embodiment, the first hinge portion 11 and the second hinge portion 21 comprise one or more tapered portions 12, 22 defining a relative pivoting axis A-A. In particular, the first hinge portion 11 and the second hinge portion 21 can have a variable thickness to define the one or more tapered portions 12, 22 and relative pivoting axes A-A. In details, each tapered portion 12, 22 adds a degree of freedom along the relative pivoting axis A-A and pivots the relative first and second retaining walls 10, 20 around each pivoting axis A-A.

According to the embodiment shown in figure 2, the first hinge portion 11 and the second hinge portion 21 comprise respectively a first tapered portion 12a, 22a connected to the at least a portion of the first retaining wall 10 and the second retaining wall 20 and a second tapered portion 12b, 22b connected to the connection base 30. The first hinge portion 11 and the second hinge portion 21 further comprise a connecting portion 13, 23 connecting the first tapered portion 12a, 22a to the second tapered portion 12b, 22b. In the present case, the first and second tapered portions 12a, 22a, 12b, 22b respectively define first pivoting axes relative to the first retaining wall 10 and second pivoting axes relative to the second retaining wall 20.

According to an alternative embodiment, the first hinge portion 11 and the second hinge portion 21 can comprise further tapered portions 12 and relative connecting portions 13 between the first and second tapered portions 12a, 22a, 12b, 22b.

According to the embodiment shown in figure 3, the first hinge portion 11 and the second hinge portion 21 comprise respectively a first tapered portion 12a, 22a connected to the at least a portion of the first retaining wall 10 and the second retaining wall 20 and a second tapered portion 12b, 22b connected to the connection base 30 and a third tapered portion 12c, 22c connected to the first and second tapered portion 12a, 22a, 12b, 22b. The first hinge portion 11 and the second hinge portion 21 further comprise a first connecting portion 13a, 23a connecting the first tapered portion 12a, 22a to the third tapered portion 12c, 22c and a second connecting portion 13b, 23b connecting the second tapered portion 12b, 22b to the third tapered portion 12c, 22c. In the present case, the first, second and third tapered portions 12a, 22a, 12b, 22b, 12c, 22c respectively define first pivoting axes relative to the first retaining wall 10 and second pivoting axes relative to the second retaining wall 20.

Thanks to the one or more tapered portions 12, 22, the retaining element can retain and secure optical cable having different diameters. Namely, the tapered portions and relative connecting portions can be increased in number to retaining optical cable having diameters increasingly reduced.

According to one embodiment, the first retaining wall 10 and the second retaining walls 20 respectively comprise a first retaining portion 14 and a second retaining portion 24. In particular, the first retaining portion 14 and the second retaining portion 24 can be joined to the first and second hinge portions 11, 21. In details, the first retaining portion 14 and the second retaining portion 24 can be joined to the first and second hinge portions 11, 21 through a tapered portion 12, 22.

According to one embodiment, the first retaining portion 14 and the second retaining portion 24 are configured to act on the outer surface 2a of the optical cable 2 to retain it in the retaining seat 40.

The wall retaining elements 51, 61 can be formed on the first retaining portion 14 and the second retaining portion 24.

According to one embodiment, the first retaining portion 14 and the second retaining portions 24 are configured to mutually pivot around the one or more pivoting axes A-A. In particular, the first hinge portion 11 and the second hinge portion 22 are configured to reversibly pivot the first and second retaining portions 10, 20 with respect to the connection base 30 upon tightening of a cable tie 3.

In detail, each tapered portion 12, 22 flexes pivoting around the relative pivoting axis A-A the first and second retaining portions 14, 24 towards respective second and first retaining portion 24, 14 to wrap around the optical cable 2.

The first retaining portion 14 and the second retaining portion 24 have a height extension measured from the first and second hinge portion 11, 21 to a free end portion along the insertion direction Z-Z.

According to a one embodiment, the height extension is a function of the diameter of the optical cable to be retained. A diameter in a range of 1,5-4,5 mm corresponds to a height extension higher than a diameter in a range, for example, of 2 to 6 mm. Namely, a reduced height extension allows to retain optical cable having a smaller diameter. According to a one embodiment, a diameter in a range of 1,5-4,5 mm corresponds to a height extension shorter than a diameter in a range, for example, of 1 to 3 mm. Also in this embodiment, a reduced height extension allows to retain optical cable having a smaller diameter.

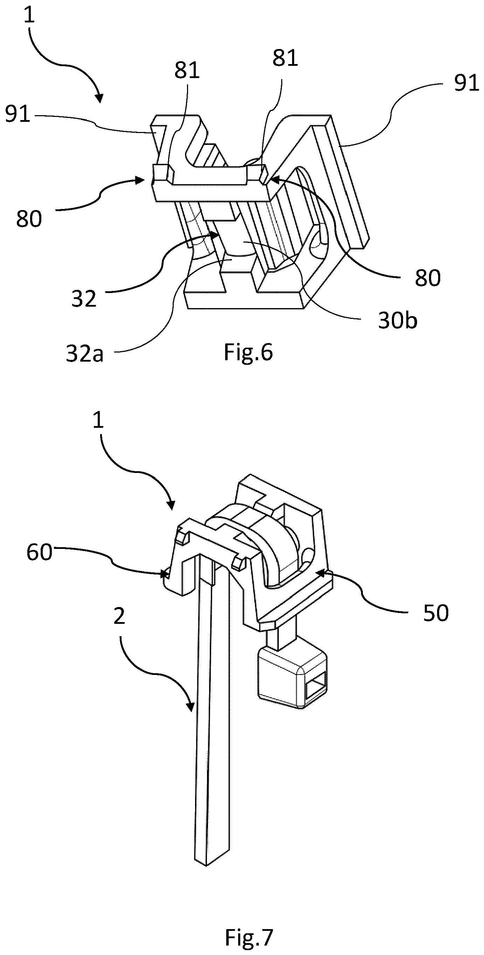

According to one embodiment, the connection base 30 comprises a cable tie retaining element 32 configured to longitudinally retain a cable tie 3. Namely, the cable tie retaining element 32 is arranged on a rear surface 30b of the connection base 30 opposed to the support surface 30a. The cable tie retaining element 32 can comprise a recess 32a to receive and accommodate a portion of the cable tie 3 passing through the first and second tightening openings 71, 72. In this way, the cable tie retaining element 32 prevents longitudinal sliding of the cable tie 3 as shown in figure 7.

It is further object of the present invention the retaining assembly 200.

The retaining assembly 100 comprises an optical cable 2 to be retained with respect to an optical box 100.

The retaining assembly 200 comprises at least one retaining element 1 configured to retain and support the optical cable 2 with respect to the box 100.

The retaining assembly 200 further comprises a cable tie 3 passing through the first and second tightening apertures 71, 72 to flex the at least a portion of the first retaining wall 10 to approach the first retaining wall 10 to the second retaining walls 20 upon tightening of the cable tie 3.

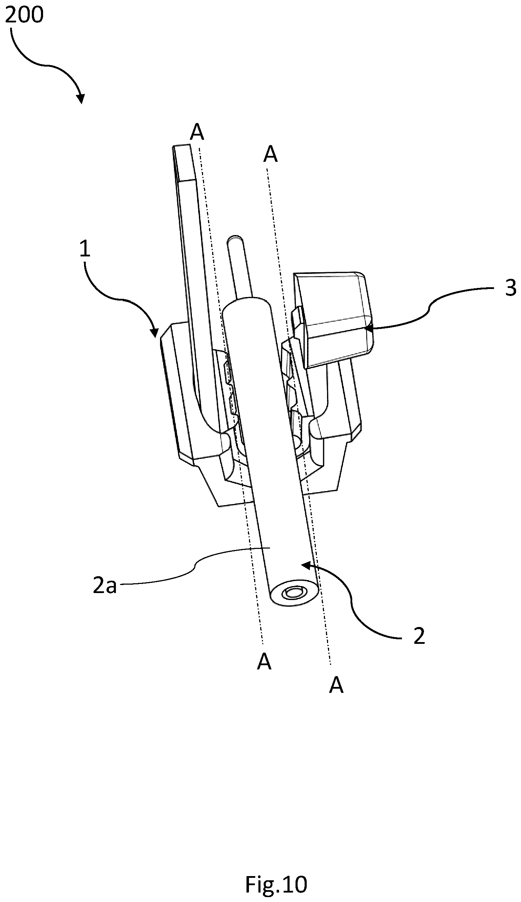

According to one embodiment, the cable tie 3 is configured to be inserted in the first and second tightening aperture 71, 72 and to be bended at the rear surface 30b such that the cable tie 3 engages the first and second retaining wall 10, 20, as shown in figures 7 and 10. The tightening of the cable tie 3 approaches the first and second retaining walls 10, 20 flexing at least a portion of the first retaining wall 10.

According to one embodiment, as above reported, also at least a portion of the second retaining wall 20 is able to flex. Accordingly, the tightening of the cable tie 3 mutually approaches the first and second retaining walls 10, 20 upon tightening.

According to one embodiment, the retaining element 1 can be made in polymeric materials such as polyamide, in particular polyamide reinforced with glass fibers, or ABS, PC, PP.

A further object of the present invention is the cable box 100.

The cable box 100 comprises a base 110 and a wall 120 extending from the base 110.

The base 110 has a retaining frame 130 for retaining at least one retaining element 1.

The base 110 can further has splicing and routing area 140 and a base cover.

The cable box 100 comprises at least one retaining element 1. The first and second support walls 10, 20 are attached to the retaining frame 130 and the at least one retaining element 1 is configured to retain an optical cable 2 with respect to the retaining frame 1 upon tightening of the cable tie 3 passing through the first and second tightening apertures 71, 72.

As a above reported, the at least one retaining element 1 according to one embodiment can be removably attached to the retaining frame 130. Alternatively, the at least one retaining element 1 is formed in one-piece with the retaining frame 130.

## Claims

1. A retaining element (1) for retaining and securing an optical cable (2), the retaining element (1) comprising:
- a first retaining wall (10) and a second retaining wall (20);
- a connection base (30) connecting the first retaining wall (10) to the second retaining wall (20), the connection base (30) having a support surface (30a) for receiving an optical cable (2) along a longitudinal direction (X-X);
wherein the retraining element (2) comprises:
- a first support wall (50) and a second support wall (60) attachable to an optical box (100) and extending from the connection base (30), the first support wall (50) and the second support wall (60) respectively with the first retaining wall (10) and the second retaining wall (20) defining therebetween a first tightening aperture (71) and a second tightening aperture (72) configured to receive a cable tie (3);
wherein
- at least a portion of the first retaining wall (10) is configured to flex with respect to the connection base (30) to approach the first retaining wall (10) to second retaining wall (20) upon tightening of the cable tie (3) passing through the first and second tightening apertures (71, 72).

2. The retaining element (1) according to claim 1, wherein the first retaining wall (10) comprises a first hinge portion (11) connected to the connection base (30) and configured to flex for pivoting the at least a portion of the first retaining wall (10) with respect to the connection base (30) around one or more pivoting axes (A-A) parallel to the longitudinal direction (X-X).

3. The retaining element (1) according to claim 1 or 2, wherein:
- at least a portion of the second retaining wall (20) is configured to flex with respect to the connection base (30) to mutually approach the first retaining wall (10) and the second retaining wall (20) upon tightening of the cable tie (3) passing through the first and second tightening apertures (71, 72).

4. The retaining element (1) according to claim 3, wherein:
- the second retaining wall (20) comprises a second hinge portion (21) connected to the connection base (30) and configured to flex for pivoting the at least a portion of the second retaining wall (30) around one or more pivoting axes (A-A) parallel to the longitudinal direction (X-X).

5. The retaining element (1) according to claim 4, wherein the first hinge portion (11) and the second hinge portion (21) comprise one or more tapered portions (12, 22) defining a relative pivoting axis (A-A).

6. The retaining element (1) according to claim 5, wherein the first hinge portion (11) and the second hinge portion (21) comprise respectively:
- a first tapered portion (12a, 22a) connected to the at least a portion of the first retaining wall (10) and the second retaining wall (20) and a second tapered portion (12b, 22b) connected to the connection base (30);
- a connecting portion (13, 23) connecting the first tapered portion (12a, 22a) to the second tapered portion (12b, 22b).

7. The retaining element (1) according to any claims 4 to 6, wherein the first retaining wall (10) and the second retaining wall (20) respectively comprise a first retaining portion (14) and a second retaining portion (24), the first retaining portion (14) and the second retaining portion (24) being joined to the first and second hinge portions (11, 21) and being configured to mutually pivot around the one or more pivoting axes (A-A).

8. The retaining element (1) according to claim 7, wherein the first hinge portion (11) and the second hinge portion (22) are configured to reversibly pivot the first and second retaining portions (10, 20) with respect to the connection base (30) upon tightening of a cable tie (3).

9. The retaining element (1) according to any claims 1 to 8, wherein the first and second retaining walls (10, 20) have respective inner surfaces (10a, 20a) configured to act on the optical cable (2) and opposed outer surfaces (10b, 20b), the first and second retaining walls (10, 20) comprising wall retaining elements (51, 61) arranged on inner surfaces (10a, 20a) and configured to prevent the optical cable (2) from sliding relative to the first and second retaining walls (10, 20) along the longitudinal direction (X-X).

10. The retaining element (1) according to any claims 1 to 9, wherein the connection base (30) comprising base retaining elements (31) arranged on the support surface (30a) and configured to prevent the optical cable (2) from sliding relative to the connection base (30) along the longitudinal direction (X-X).

11. The retaining element (1) according to any claims 1 to 10, wherein the connection base (30) comprises a cable tie retaining element (32) configured to longitudinally retain a cable tie (3).

12. The retaining element (1) according to any claims 1 to 11, wherein the first support wall (50) and the second support wall (60) comprise retaining attachment members (80) configured to removably attach the retaining element (1) to the optical box (100) and support members (90) configured to support the retaining element (1) with respect to the optical box (100) along a insertion direction (Z-Z) perpendicular to the longitudinal direction (X-X).

13. A retaining assembly (200) comprising:
- an optical cable (2) to be retained with respect to an optical box (100)
- at least one retaining element (1) according to any claims 1 to 11 attachable to the optical box (100) for retaining and securing the optical cable (2);
- a cable tie (3) passing through the first and second tightening apertures (71, 72) to flex the at least a portion of the first retaining wall (10) to approach the first retaining wall (10) to the second retaining walls (20) upon tightening of the cable tie (3).

14. A cable box (100) comprising:
- a base (110) and wall (120) extending from the base (110), the base (110) having a retaining frame (130);
- at least one retaining element (1) according to any claims 1 to 11, wherein the first and second support walls (10, 20) are attached to the retaining frame (130) and the at least one retaining element (1) being configured to retain an optical cable (2) with respect to the retaining frame (1) upon tightening of the cable tie (3) passing through the first and second tightening apertures (71, 72).

15. The cable box (100) according to claim 14, wherein the at least one retaining element (1) is formed in one-piece with the retaining frame (130).
